## Europäisches Patentamt
## European Patent Office
## Office européen des brevets

(19)

(11) Veröffentlichungsnummer: **0 314 966 B1**

(12) **EUROPÄISCHE PATENTSCHRIFT**

(45) Veröffentlichungstag der Patentschrift: **15.01.92**

(21) Anmeldenummer: **88117198.7**

(22) Anmeldetag: **15.10.88**

(51) Int. Cl.⁵: $C09D$ **11/02**

(54) **Zubereitung auf Basis von Titan-Chelaten von Diolen und von Titanacylaten.**

(30) Priorität: **31.10.87 DE 3737047**

(43) Veröffentlichungstag der Anmeldung:
**10.05.89 Patentblatt 89/19**

(45) Bekanntmachung des Hinweises auf die
Patenterteilung:
**15.01.92 Patentblatt 92/03**

(84) Benannte Vertragsstaaten:
**DE FR GB**

(56) Entgegenhaltungen:
**EP-A- 0 050 873**
**FR-A- 2 157 814**
**US-A- 3 682 688**

(73) Patentinhaber: **HÜLS AKTIENGESELLSCHAFT**
**Paul-Baumann-Strasse 1**
**W-4370 Marl 1(DE)**

(72) Erfinder: **Barfurth, Dieter**
**Adenauerstrasse 34**
**W-5210 Troisdorf-Spich(DE)**
Erfinder: **Nestler, Heinz, Dr.**
**Rembrandstrasse 73**
**W-5210 Troisdorf-Eschmar(DE)**

EP 0 314 966 B1

**Beschreibung**

Die Erfindung betrifft Zubereitungen mit Gehalten von Titan-Chelaten von Alkylendiolen und von Titanacylaten der Monocarbonsäuren.

Diese Zubereitungen sind besonders als Additive für Druckfarben einsetzbar, um diesen Druckfarben eine verbesserte Haftung auf schwer bedruckbaren Untergründen, wie beispielsweise Polypropylenfolien, zu verleihen.

Für diesen Zweck wird seit Jahren das Diisopropoxytitan (IV)bis-acetylacetonat, kurz Titanacetylacetonat genannt, mit Erfolg benutzt. Der Nachteil des Titanacetylacetonats besteht in seiner dunkelroten Eigenfarbe und in der Verfärbung von Stoffen, denen es zugesetzt wurde, was bei Druckfarben, besonders bei weißen Druckfarben, hervortritt.

Bei der Suche nach nicht verfärbenden, haftvermittelnden Additiven auf Titanbasis waren folgende Kriterien zu beachten:

a) Verträglichkeit mit Druckfarben-Bindemitteln. Bei Zusatz des Additivs darf keine Gelierung der Druckfarbe eintreten. Viskositätserhöhung durch Vernetzung soll nicht auftreten;

b) möglichst geringe Eigenfarbe des Additivs;

c) ausreichende haftvermittelnde Wirkung.

Das von uns in Betracht gezogene Titan-Chelat des 2-Ethylhexandiol-1,3 (auch Octylenglykol genannt) mit dem Molverhältnis 4 : 1, kurz OGT-HV genannt, erfüllt zwar die Bedingungen a) und b), war aber nicht genügend wirksam als Haftvermittler in einer Nitrocellulose-Druckfarbe auf Polypropylenfolie. Der durch Titanacetylacetonat vorgegebene Standard wurde nicht erreicht.

Es bestand daher die Aufgabe, Zubereitungen auf Basis von Titanverbindungen zu finden, die ausreichende haftvermittelnde Wirkung besitzen und als zugesetztes Additiv pastöse bzw. flüssige Stoffe und Stoffmischungen, besonders Druckfarben, möglichst wenig verfärben und verändern.

Gegenstand der Erfindung sind die Zubereitungen und deren Verwendung gemäß den Patentansprüchen 1 bis 8.

Überraschenderweise wurde nämlich gefunden, daß Mischungen aus Titan-Chelaten von gesättigten Diolen und Titanacylaten von Monocarbonsäuren Haftverbesserungen bewirken, die denen durch Titanacetylacetonat-Zusatz bei gleichen Zusatzmengen überlegen oder gleichwertig sind. Diese Mischungen haben jedoch den Vorteil, nicht vergilbend, verfärbend oder in anderer Weise verändernd auf Druckfarben, besonders weiße Druckfarben, einzuwirken.

Die Titan-Chelate der gesättigten Diole und die Titanacylate sollen im Gewichtsverhältnis 4 : 1 bis 1 : 3 in den Zubereitungen enthalten sein.

In den Titan-Chelaten der gesättigten Diole sind 1,3-Diole bevorzugt. Die Diole sollen 3 bis 12 C-Atome, vorzugsweise 6 bis 10 C-Atome, besitzen. Geeignete Diole sind insbesondere 2-Ethylhexandiol-1,3, 2-Methylpentandiol-2,4 und Propandiol-1,3. Die Diolreste bilden eine Hauptvalenz und mit der zweiten Hydroxylgruppe eine Nebenvalenz in Art der Chelate zum Titan aus. Die Titan-Chelate entstehen aus Alkyltitanaten (= Tetraalkoxytitan), von denen die mit 2 bis 4 Kohlenstoffatomen in der Alkoxygruppe bevorzugt sind. Je Titan sind 2 bis 4, vorzugsweise 3 bis 4 Mol Diol je Mol Titan gebunden, wodurch bis zu 2 Alkoxyreste an Titan gebunden bleiben.

Die Titanacylate enthalten in entsprechender Weise 1 bis 4, vorzugsweise 2 bis 3 Reste der gesättigten Monocarbonsäure und entsprechend bis zu 3 Alkoxyreste. Die Acylate sind keine Chelate. Die gesättigten Carbonsäuren sind insbesondere aliphatische Monocarbonsäuren mit 3 bis 18 C-Atomen, bevorzugt 3 bis 12 C-Atomen.

Die Reaktion zur Bildung der Chelate und der Acylate erfolgt bereits bei 20 bis 90° C, vorzugsweise bei 20 bis 60° C, unter Normaldruck. Nach dieser Methode können zunächst die Titandiol-Chelate und die Titanacylate getrennt hergestellt und anschließend im gewollten Verhältnis vermischt werden. Es können auch gemischte Titanate mit Diolresten und Resten der Monocarbonsäuren hergestellt und als Zubereitung verwendet werden. Man setzt dann Diole und Monocarbonsäuren, bevorzugt nacheinander, mit der berechneten Menge Alkyltitanat um.

In den Chelaten und Acylaten sowie in den gemischten Titanaten kann der Alkohol durch Destillation entfernt werden oder der gebildete Alkohol ganz oder teilweise erhalten bleiben.

In den Acylaten sind insbesondere die Reaktionsprodukte mit 2 Mol Carbonsäure je Mol Titan lediglich schwach gelblich gefärbt und erfüllen damit gut die Bedingung b). Überraschend jedoch ist, daß Mischungen der Chelate und der Acylate alle Bedingungen a) bis c) besser erfüllen als Chelate und Acylate allein. Hinsichtlich der Verträglichkeit der Zubereitungen mit Druckfarben (Kriterium a) wurde festgestellt, daß bei Zusatzmengen über 2 Gew.-% je nach Art der verwendeten Carbonsäure Verdikkungen bzw. Gelierungen auftraten, die bei Verwendung der Zubereitung aus Chelaten und Acylaten überraschend nicht auftreten.

Titanacylate sind also nur mit Einschränkung der Druckfarbe zusetzbar, obgleich auch sie einen haftvermittelnden Effekt ergeben, der aber schwächer als bei den Chelaten der Diole ist. Bei den Zubereitungen jedoch übertrifft die haftvermittelnde Wirkung jede der beiden Komponenten.

Zubereitungen aus Mischungen der Titan-Chelate von Diolen und der Titanacylate bzw. die entsprechenden gemischten Titanate haben überraschend erfindungsgemäß keine verdickende oder gelierende Wirkung und erfüllen vollständig die Bedingungen der gestellten Aufgabe.

Die Zubereitungen werden einfach durch Mischen der beiden Titanverbindungen erhalten. Insbesondere soweit bei der Herstellung der jeweiligen Substanzen die entstehenden Alkohole nicht oder nur zum Teil entfernt wurden, ist es zweckmäßig, daß diese ebenfalls in den Zubereitungen enthalten sind. Es können jedoch außer Alkoholen mit 2 bis 4 Kohlenstoffatomen auch Glykole gleicher Kettenlänge und Glykolether dieser Alkohole entsprechender Kettenlänge als Lösungsmittel vorhanden sein. Die Menge der in den Zubereitungen enthaltenen Lösungsmittel kann bis zu 60 % der Zubereitung betragen.

Die erfindungsgemäßen Zubereitungen können als Additiv für flüssige oder pastöse Überzugsmittel verwendet werden, denen eine erhöhte Haftung auf einem Untergrund vermittelt werden soll. Besonders sollen die Zubereitungen als Additiv zu lösungsmittelhaltigen Druckfarben verwendet werden. Vornehmlich Flexodruckfarben auf Basis von Nitrocellulose allein oder mit Zusätzen von Maleinatharz, Celluloseestern, Polyamiden o. dgl., erhalten durch die erfindungsgemäßen Zubereitungen erhöhte Haftkraft, wohingegen unerwünschte Veränderungen gemäß Kriterium a) nicht eintreten. Die Zusatzmengen der Additive liegen im Bereich von 0,5 bis 7 , vorzugsweise 1,5 bis 4,5 Gew.-%. Insbesondere besitzen die erfindungsgemäßen Zubereitungen gegenüber bekannten Additiven auf Basis von Titan-Derivaten den erheblichen Vorteil, die Färbung von Druckfarben und anderen flüssigen bzw. pastösen Überzugsmitteln praktisch nicht zu verändern und auch deren Viskosität weniger stark zu beeinflussen als beispielsweise Titanacetylacetonat-Zusätze. Insbesondere wird auch keine farbvertiefende Wechselwirkung zwischen Additiv und Antioxidantien in Beschichtungsmitteln oder Substraten beobachtet.

## Beispiel 1

Herstellung des 2-Ethylhexandiol-1,3-Titan-Chelats Molverhältnis 4 : 1

In einem 1.000 ml-Kolben mit Rührer, Thermometer, Tropftrichter und Rückflußkühler werden 241,4 g (0,85 Mol) Isopropyltitanat vorgelegt und über den Tropftrichter portionsweise so mit 496,4 g (3,4 Mol) 2-Ethylhexandiol-1,3 versetzt, so daß die Temperatur der Reaktionsmischung nicht über 70$^\circ$ C steigt. Nach beendeter Diol-Zugabe wird 30 min bei 70$^\circ$ C gerührt und anschließend Isopropanol abdestilliert.

Zunächst unter Normaldruck, nach Entfernung von ca. 75 % der theoretisch zu erwartenden Isopropanolmenge wird die Abtrennung unter vermindertem Druck sowiet fortgesetzt, bis 200,9 g Isopropanol (3,35 Mol = 98,5 % d. Th.) aus der Reaktionsmischung entfernt sind.

Erhalten wird eine gelbliche, hochviskose Flüssigkeit mit folgenden Kennzahlen:

| | |
|---|---|
| Brechungszahl $n^{20}_D$ | 1,495 |
| Viskosität bei 20$^\circ$ C | 3.500 mPa.s |
| Dichte bei 20$^\circ$ C | 1,03 g/ml |
| Gehalt $TiO_2$ | 13,0 Gew.-% |
| Flammpunkt | 50$^\circ$ C (DIN 51 755) |
| Löslichkeit | |
| a) in Wasser<br>b) in organischen Lösungsmitteln: mischbar mit aliphatischen, aromatischen und chlorierten Kohlenwasserstoffen mit Alkoholen, Estern und Ketonen. | 0,1 Gew.-% |

## Beispiel 2

Herstellung des 2-Methylpentandiol-2,4-Titan-Chelats mit dem Molverhältnis 3 : 1

In einem 1.000 ml-Kolben mit Rührer, Tropftrichter, Thermometer und Rückflußkühler werden 238 g (0,7 Mol) Butyltitanat vorgelegt und in Portionen mit 247,8 g (2,1 Mol) 2-Methylpentandiol-2,4 versetzt. Die Temperatur steigt auf 30$^\circ$ C an. Die Reaktion ist nach einer Stunde beendet. Es entsteht ein Chelat mit drei Diolresten und einem Butoxyrest. Das entstandene Butanol bleibt im Reaktionsprodukt.
Erhalten wird eine orangefarbene Flüssigkeit, aus der sich beim Stehen allmählich Kristalle abscheiden

| Viskosität bei 20° C | 39 mPa.s |
|---|---|
| Dichte bei 20° C | 0,960 g/ml |
| Gehalt $TiO_2$ | 11,5 % |

Die Löslichkeiten entsprechen Beispiel 1.

**Beispiel 3**

Herstellung des Titanacylats aus 1 Mol Butyltitanat und 2 Mol Capronsäure

In einem 1.000 ml-Kolben, der mit Rührer, Thermometer, Tropftrichter und Rückflußkühler versehen ist, werden 340 g (1 Mol) Butyltitanat vorgelegt und über den Tropftrichter so mit 232 g (2 Mol) Capronsäure (Hexansäure) langsam versetzt, so daß die Temperatur der Reaktionsmischung nicht über 50° C ansteigt. Nach beendeter Zugabe wird noch 30 min bei 80° C gerührt.
Erhalten wird eine gelbliche, leicht bewegliche Flüssigkeit mit folgenden Kennzahlen:

| Brechungszahl $n^{20}_D$ | 1,461 |
|---|---|
| Viskosität bei 20° C | 9,5 mPa.s |
| Dichte bei 20° C | 0,97 g/ml |
| Gehalt $TiO_2$ | 14,0 Gew.-% |
| Flammpunkt | 38° C (DIN 51 755) |
| Löslichkeit | |
| a) Wasser in Titanacylat | 0,1 Gew.-% |
| b) Titanacylat in Wasser | 0,1 Gew.-% |
| c) in organischen Lösungsmitteln: mischbar mit Alkoholen, Estern, Ketonen, aromatischen und aliphatischen Kohlenwasserstoffen. | |

**Beispiel 4**

Herstellung des Titanacylats aus 1 Mol Butyltitanat und 2 Mol Laurinsäure

In einem 1.000 ml-Kolben, der mit Rührer, Thermometer und Rückflußkühler versehen ist, werden 340 g (1 Mol) Butyltitanat vorgelegt, auf ca. 50° C erwärmt und portionsweise mit insgesamt 400 g (2 Mol) fein gepulverter Laurinsäure (Dodecansäure) versetzt. Die Temperatur der Reaktionsmischung wird zum Auflösen der Laurinsäure auf 90° C erhöht und 30 min beibehalten.
Erhalten wird eine gelbliche, leicht bewegliche Flüssigkeit mit folgenden Kennzahlen:

| Brechungszahl $n^{20}_D$ | 1,473 |
|---|---|
| Viskosität bei 20° C | 42 mPa.s |
| Dichte bei 20° C | 0,995 g/ml |
| Gehalt $TiO_2$ | 10,8 Gew.-% |
| Flammpunkt | 31° C (DIN 51 755) |
| Löslichkeit | |
| a) Wasser in Titanacylat | ca. 15 g/100 g |
| b) Titanacylat in Wasser | 0,1 % |
| c) in organischen Lösungsmitteln: mischbar mit Alkoholen, Estern, Ketonen, aromatischen und aliphatischen Kohlenwasserstoffen. | |

**Beispiel 5**

Titanacylat der Propionsäure (2:1) und Mischungen mit dem Produkt von Beispiel 2

Zu der Reaktionsmischung nach Beispiel 2 werden über den Tropftrichter 243 g des nach der im Beispiel 3 beschriebenen Methode aus 2 Mol Propionsäure und 1 Mol Butyltitanat hergestellten Propionsäure-(2:1)-Titanacylats gegeben. Nach 30 min Rühren wird eine gelbliche Flüssigkeit mit folgenden Kennzahlen erhalten:

| | |
|---|---|
| Brechungszahl $n^{20}_D$ | 1,45 |
| Viskosität bei 20° C | 36 mPa.s |
| Dichte bei 20° C | 0,96 g/l |
| Gehalt $TiO_2$ | 13,1 Gew.-% |
| Löslichkeit | |
| a) in Wasser | 0,1 Gew.-% |
| b) in organischen Lösungsmitteln: mischbar mit Alkoholen, Estern und Ketonen sowie mit aliphatischen und aromatischen Kohlenwasserstoffen. | |

Zu dem frisch hergestellten Produkt von Beispiel 2 können auch 2 Mol Propionsäure und 1 Mol Butyltitanat gegeben und mit gleichartigem Ergebnis umgesetzt werden.

**Beispiel 6**

Herstellungen von Mischungen aus 1,3 Diol-Titanaten und Titanacylaten (allgemeine Vorschrift)

In einem 1000 ml-Kolben mit Rührer, Thermometer und Tropftrichter wird die dem größeren Anteil im Gemisch entsprechende Komponente vorgelegt und die zweite Komponente unter Rühren zudosiert. Nach beendeter Zugabe wird noch 30 min gerührt.

**Beispiel 7**

Herstelung eines gemischten Titanacylat-Chelats mit 2-Methylpentandiol-2,4 als Diol- und Octansäure als Carbonsäurekomponente

In einem 1000 ml-Kolben mit Rührer, Thermometer, Tropftrichter und Rückflußkühler wird wie in Beispiel 2 beschrieben aus 340 g (1,0 Mol) Butyltitanat und 288 g (2,0 Mol) Octansäure ein Titanacylat hergestellt. In die auf 25° C abgekühlte Reaktionsmischung werden dann 118 g (1,0 Mol 2-Methylpentandiol-2,4 eingerührt und 30 min auf 60° C erhitzt. Nach Abkühlen wird eine gelbliche, leicht bewegliche Flüssigkeit mit folgenden Kennzahlen erhalten:

| | |
|---|---|
| Brechungszahl $n^{20}_D$ | 1,449 |
| Viskosität bei 20° C | 20 mPa.s |
| Dichte bei 20° C | 0,94 g/ml |
| Titandioxid | 10,7 % |
| Flammpunkt | 35° C (DIN 51 755) |
| Löslichkeit | |
| a) in Wasser | 0,1 % |
| b) in organischen Lösungsmitteln: mischbar mit Alkoholen, Estern, Ketonen, aliphatischen sowie aromatischen Kohlenwasserstoffen. | |

**Beispiel 8**

Beispiel 2 wird wiederholt, wobei jedoch 2,1 Mol Propandiol-1,3 als Diol umgesetzt werden. Die Eigenschaften entsprechen Beispiel 1.

**Beispiel 9**

Beispiel 4 wird wiederholt, wobei jedoch 2 Mol Myristinsäure umgesetzt werden. Die Eigenschaften des Produktes entsprechen Beispiel 4.

**Beispiel 10**

Prüfung der haftvermittelnden Wirkung erfindungsgemäßer Zubereitungen in einer Nitrocellulose-Druckfarbe auf Polypropylen

Zu einer Nitrocellulose-Druckfarbe, die 25 % Nitrocellulose des Norm-Typs 34 E, gelöst in Ethanol-Ethylacetat, und Titandioxid als Weißpigment enthält, wurden 4 % der erfindungsgemäßen Gemische, gegeben und einige Minuten eingerührt.
Mittels einer Filmziehspirale wurde die so modifizierte Druckfarbe in einer Naßschichtdecke von 12 my auf koronavorbehandelte Polypropylenfolie aufgezogen und nach 15 min Lufttrocknung 1 min bei 60° C im Umluftschrank nachgetrocknet. Anschließend wurde die Haftung der Druckfarbe auf dem Polypropylen mittels Klebeband-Abriß ermittelt:
Auf eine Fläche von ca. 4 cm$^2$ wurde ein Klebefilmstreifen (z.B. Tesafilm) aufgeklebt und in einem Ruck wieder abgezogen.

| Tabelle der Ergebnisse: | |
|---|---|
| Additiv | Abriß von ... % der Farbschicht |
| Octylenglykoltitanat (OGT) nach Beispiel 1 (Vergleich) | 10 % |
| Titanacylat, nach Beisp. 3 | 25 % |
| OGT + Titanacylat (nach Beisp. 3) 1 : 1 gemischt | 1 % |
| OGT + Titanacylat (nach Beisp. 4) 3 : 1 gemischt | 1 % |
| OGT + Titanacylat (nach Beisp. 3) 1 : 2 gemischt | 4 % |
| Zubereitung nach Beispiel 5 | 4,5 % |
| Zubereitung nach Beispiel 7 | 3,5 % |
| Titanacetylacetonat (Vergleich) | 5 % |

**Beispiel 11**

Prüfung der farbvertiefenden Wirkung von erfindungsgemäßen Gemischen mit einem Nitrocellulose-Maleinatharz-Firnis

Zu einem Nitrocellulose-Maleinatharz-Firnis, der 8 Gew.-% alkohollösliche Nitrocellulose und 10 Gew.-% eines Maleinatharzes der Säurezahl 130 in Ethanol gelöst enthält, werden jeweils 5 Gew.-% der erfindungsgemäßen Gemische gegeben und die Gardner-Farbzahl dieser Firnisse bestimmt.
Zum Vergleich wird eine Firnisprobe mit 5 Gew.-% Titanacetylacetonat versetzt:

| Additiv | Farbzahl nach Gardner | Farbton |
|---|---|---|
| ohne | 8 | gelb |
| Titanacetylacetonat | 16 (Vergl.) | rot |
| OGT + Titanacylat (Beisp.3) 1:1 gemischt | 12 | hellorange |
| OGT + Titanacylat (Beisp.4) 3:1 gemischt | 10 | hellgelborange |

Die erfindungsgemäßen Zubereitungen bewirken auch bei einem sehr dunklen Firnis der Farbzahl 8 eine wesentlich geringere Farbvertiefung als bei Zusatz von Titancetylacetonat. Erfolgt jedoch der Zusatz der Zubereitungen zu hellem reinen Nitrocellulose-Lack, so wird dessen Färbung wenig verändert.

**Beispiel 12**

Prüfung der Reaktion der erfindungsgemäßen Mischungen mit Antioxidantien

Beim Vermischen von Butylhydroxianisol-(BHA)-Lösungen mit Titanacetylacetonat-Lösungen tritt eine starke Verfärbung auf. Da solche Stoffe wie BHA als Antioxidantien auch in zu bedruckenden Folien enthalten sind, wurde die Reaktion von Lösungen der erfindungsgemäßen Mischungen mit einer BHA-Lösung geprüft: Die Verfärbung ist wesentlich geringer, somit ist auch die Vergilbungsgefahr beim Bedrucken von Folien mit Druckfarben, die die erfindungsgemäßen Gemische enthalten, als deutlich geringer anzusehen.

| Tabelle der Ergebnisse (Mischung 1 gew.-%iger Lösungen in Isopropanol) | |
|---|---|
| Additiv | Farbzahl nach Gardner |
| Titanacetylacetonat<br>OGT + Titanacylat (Beisp. 3) 1 : 1 gemischt<br>OGT + Titanacylat (Beisp. 4) 3 : 1 gemischt | 11<br>5 - 6<br>5 |
| Mischungen der weiteren Beispiele ergeben ebenfalls Farbzahlen von 5 bis 6. | |

**Beispiel 13**

Viskositätsverhalten einer NC-Farbe nach Zusatz der erfindungsgemäßen Mischungen

Als Prüfmedium diente eine 25 Gew.-%ige esterlösliche Nitrocellulose enthaltende weiße Druckfarbe, der 4 Gew.-% der zu prüfenden Substanzen zugesetzt wurden. Die Viskosität wurde mit einem Rotationsviskosimeter bestimmt, gelagert wurde zwischen den Messungen bei 50° C.
Die Versuchsergebnisse zeigen eine Abhängigkeit des Viskositätsverlaufs von der Art des in der Mischung vorhandenen Titanacylats:
Bei Anwesenheit kürzerkettiger Carbonsäuren ist die Viskosität nach 2 Monaten Lagerung deutlich höher als bei Verwendung eines Titanacylats mit einer langkettigen Carbonsäure. Dieser Viskositätsanstieg erreicht jedoch nur die Werte, die durch den Zusatz von Titanacetylacetonat erhalten werden. Bei den Acylaten der langkettigen Carbonsäuren verändert sich die Viskosität nach anfänglichem Anstieg und anschließendem Absinken kaum noch. Dieses Verhalten ist vorteilhaft gegenüber dem Titanacetylacetonat-Zusatz.

| Tabelle der Ergebnisse: | | | | | |
|---|---|---|---|---|---|
| Additiv | Viskosität in mPa.s nach | | | Lagerzeit bei 50° C | |
| | 1 Tag | 1 Woche | 2 Wochen | 1 Monat | 2 Monate |
| Titanacetylacetonat | 560 | 480 | 480 | 440 | 850 |
| Octylenglycoltitanat (OGT) | 1210 | 540 | 460 | 650 | 1170 |
| OGT + Titanacyl. (Beisp.3) 1:1 | 670 | 480 | 380 | 430 | 1030 |
| OGT + Titanacyl. (Beisp.4) 3:1 | 810 | 420 | 390 | 370 | 480 |

**Patentansprüche**

1. Zubereitung auf Basis von Titan-Chelaten zur Verbesserung von Vernetzung und Haftung von Überzugsmitteln, enthaltend oder bestehend aus einer Mischung von wenigstens einem Titan-Chelat von gesättigten Diolen mit 3 bis 12 C-Atomen und wenigstens einem Titanacylat von gesättigten Monocarbonsäuren mit 3 bis 18 C-Atomen bzw. gemischte Titanate mit Diolresten und Monocarbonsäureresten im Molverhältnis 4 : 1 bis 1 : 3.

2. Zubereitung nach Anspruch 1, dadurch gekennzeichnet, daß die Alkylendiolgruppen der Titan-Chelate von Diolen vorzugsweise 6 bis 10 C-Atome besitzen.

3. Zubereitung nach Anspruch 2, dadurch gekennzeichnet, daß die Titan-Chelate von Diolen 2 bis zu 4 Alkylendiolgruppen, vorzugsweise 3 oder 4 Alkylendiolgruppen und ggf. bis zu 2 Alkoxygruppen je Titanatom gebunden enthalten.

4. Zubereitung nach Anspruch 1, dadurch gekennzeichnet, daß die Titanacylate Monocarbonsäuren mit Kettenlängen von bevorzugt 3 bis 12 C-Atomen enthalten.

5. Zubereitung nach Anspruch 4, dadurch gekennzeichnet, daß die Titanacylate 1 bis 4, vorzugsweise 2 oder 3 Carbonsäurereste und ggf. bis zu 3 Alkoxygruppen enthalten.

6. Zubereitung nach einem der vorangehenden Ansprüche, gekennzeichnet durch Gehalte von Lösungsmitteln, besonders von Alkoholen, Glykolen oder Glykolethern mit 1 bis 6 C-Atomen in Mengen bis zu 60 Gew.-% der Zubereitung.

7. Verwendung der Zubereitung nach einem der vorangehenden Ansprüche als Mittel zur Haftverbesse- rung und zur Vernetzung von Bindemitteln mit reaktiven Gruppen.

8. Verwendung der Zubereitung nach einem der Ansprüche 1 bis 6 als Additiv zu lösungsmittelhaltigen Druckfarben.

**Claims**

1. Composition based on titanium chelates for improvement of cross-linking and adhesion of coating materials, containing or consisting of a mixture of at least one titanium chelate of saturated diols with 3 to 12 C-atoms and at least one titanium acylate of saturated monocarboxylic acids with 3 to 18 C-atoms or mixed titanates with diol residues and monocarboxylic acid residues in the molar ratio 4:1 to 1:3.

2. Composition according to Claim 1, characterised in that the alkylene diol groups of the titanium chelate of diols preferably possess 6 to 10 C-atoms.

3. Composition according to Claim 2, characterised in that the titanium chelates of diols contain connected 2 to 4 alkylene diol groups, preferably 3 or 4 alkylene diol groups and optionally up to two alkoxy groups per titanium atom.

4. Composition according to Claim 1, characterised in that the titanium acylates contain monocarboxylic acids with chain lengths of preferably 3 to 12 C-atoms.

5. Composition according to Claim 4, characterised in that the titanium acylates contain 1 to 4, preferably 2 or 3, carboxylic acid residues and possibly up to 3 alkoxy groups.

6. Composition according to one of the foregoing claims, characterised by contents of solvents, especially of alcohols, glycols or glycol ethers with 1 to 6 C-atoms in amounts up to 60% by weight of the composition.

7. Use of the composition according to one of the foregoing claims as material for adhesion improvement and for cross-linking of binders with reactive groups.

8. Use of the composition according to one of the claims 1 to 6 as an additive to solvent containing printing inks.

**Revendications**

1. Préparation à base de chélates de titane pour améliorer la réticulation et l'adhérence de revêtements, contenant ou consistant en un mélange d'au moins un chélate de titane et de diols saturés ayant 3 à 12 atomes de carbone et d'au moins un acylate de titane dérivant d'acides monocarboxyliques insaturés ayant 3 à 18 atomes de carbone ou en titanates mixtes avec des restes diol et des restes acide monocarboxylique selon un rapport molaire de 4:1 à 1:3.

2. Préparation selon la revendication 1, caractérisée en ce que les groupes alkylènediol des chélates de diols et de titane comporte de préférence 6 à 10 atomes de carbone.

3. Préparation selon la revendication 2, caractérisée en ce que les chélates de diols et de titane contiennent 2 à 4 groupes alkylènediol, avantageusement 3 ou 4 groupes alkylènediol et éventuellement jusqu'à 2 groupes alcoxy liés par atome de titane.

4. Préparation selon la revendication 1, caractérisée en ce que les acylates de titane contiennent des acides monocarboxyliques dont les longueurs de chaîne ont de préférence 3 à 12 atomes de carbone.

5. Préparation selon la revendication 4, caractérisée en ce que les acylates de titane contiennent 1 à 4, avantageusement 2 ou 3 restes acide carboxylique et éventuellement jusqu'à 3 groupes alcoxy.

6. Préparation selon l'une des revendications précédentes, caractérisée en ce qu'elle contient, en des quantités allant jusqu'à 60 % du poids de la composition, des solvants, en particulier des alcools, des glycols ou des éthers de glycols.

7. Utilisation d'une préparation selon l'une des revendications précédentes comme agent d'amélioration de l'adhérence et pour la réticulation de liants ayant des groupes réactifs.

8. Utilisation de la préparation selon l'une des revendications 1 à 6 comme additif à des encres d'imprimerie contenant du solvant.